# EUROPÄISCHE PATENTSCHRIFT

(11) **EP 0 744 561 B1**
(45) Veröffentlichungstag und Bekanntmachung des Hinweises auf die Patenterteilung: **23.01.2002**
(21) Anmeldenummer: 96107641.1
(22) Anmeldetag: 14.05.1996
(51) Int. Cl.: F16D 65/16

(54) **Bremsaktor mit Getriebe**
Brake actuator with gear
Moteur de frein à engrenage

(30) Priorität: 26.05.1995 DE 19519308
(43) Veröffentlichungstag der Anmeldung: 27.11.1996
(73) Patentinhaber: Continental Aktiengesellschaft, 30165 Hannover (DE)
(72) Erfinder: Hauck, Stefan, 30173 Hannover (DE); Dieckmann, Thomas, Dr., 30982 Pattensen (DE); Maron, Christof, Dr., 30989 Gehrden (DE); Bergmann, Friedhelm, 31812 Bad Pyrmont (DE)

(56) Entgegenhaltungen:
- WO-A-89/03782
- DE-A- 4 229 042

## Beschreibung

Die Erfindung betrifft einen Bremsaktor gemäß dem Oberbegriff des Anspruchs 1.

Die DE 42 29 042 A1 beschreibt einen solchen Bremsaktor, der mit einem Elektromotor und einer Gewindespindel versehen ist. Dabei wird die Gewindespindel von dem Motor angetrieben, und eine Spindelmutter steht mit einem an eine Hydraulikkammer angeschlossenen ersten Hydraulikkolben in Eingriff. Ein zweiter Hydraulikkolben kann zwecks Durchführung eines Bremsvorgangs auf einen Reibbelag einwirken.

Da ein solcher Bremsaktor - trotz einer gewissen Kraftübersetzung mittels des Hydraulikgetriebes - einen überdimensionalen Elektromotor als Kraftquelle benötigen würde, kommen zur Erzielung einer ausreichenden übersetzung des vom Motor erzeugten Drehmoments bei sämtlichen in der DE 42 29 042 A1 beschriebenen Ausführungsformen zusätzliche, zwischen Motor und Umsetzeinrichtung geschaltete Übersetzungsgetriebe zum Einsatz.
Ein solcher Bremsaktor ist insgesamt aufwendig und kompliziert und damit nicht nur teuer in seiner Herstellung sondern auch störanfällig im Betrieb.

Aufgabe der Erfindung ist es, einen Bremsaktor mit einem einfachen Getriebe vorzuschlagen, das kompakt aufgebaut und leicht ist, und bei dem insbesondere auf ein vorgeschaltetes Zahnradgetriebe verzichtet werden kann.

Diese Aufgabe wird durch dem Anspruch 1 gelöst.

Durch die Verwendung der Spindel als Umsetzungseinrichtung in der Weise, daß einerseits die Spindelstange nicht an dem Getriebe sondern an dem ersten Hydraulikkolben, und daß andererseits die Spindelmutter nicht an dem ersten Hydraulikkolben sondern an der Motorachse angeordnet ist, und durch die Verwendung eines Elektromotors mit einer Motorachse in Form einer Hohlwelle ergeben sich gegenüber herkömmlichen Bremsaktoren zahlreiche Vorteile:

Die Bauhöhe des Elektromotors ist derartig ausgelegt, daß seine Hohlwelle den gesamten Spindelhub aufnehmen kann, so daß sich aus diesem Grunde eine äußerst geringe gesamte Baulänge des Bremsaktors ergibt. Auch sind im Unterschied zum genannten Stand der Technik sämtliche Bauteile auf einer einzigen Achse angeordnet, so daß nicht nur die Baulänge sondern auch die Breite sehr gering ist. Durch die geschickte Anordnung der Bauteile in Verbindung mit dem lokalen hydraulischen Getriebe ergeben sich insgesamt äußerst kompakte Abmessungen.

Wegen der einfachen Konstruktion ist der Bremsaktor aber auch leicht, was im Vergleich zu herkömmlichen Bremsaktoren neben der Bauraumersparnis auch eine beträchtliche Gewichtsersparnis und insgesamt geringere Herstellungskosten bedeutet.

Da der Motor nicht neben der Spindel sondern koaxial zu ihr angeordnet ist, kann der Motor relativ breit und trotzdem platzsparend ausgelegt sein. Ein solch breiter Motor verfügt über ein relativ großes Drehmoment, so daß bereits aus diesem Grunde auf ein Zahnradzwischengetriebe verzichtet werden kann.
Durch den Verzicht auf ein Zahnradgetriebe ergibt sich ein großer Wirkungsgrad des Getriebes.

Nach einer bevorzugten Ausführungsform stellt eine Verlängerung der Spindelstange den Primärkolben des Hydraulikgetriebes dar.

Weil die Spindelstange bedeutend dünner dimensioniert ist als die sich auf ihr abwälzende Spindelmutter, kann auch der Primärkolben entsprechend dünn ausgelegt sein. Auf diese Weise ist es problemlos möglich, das Hydraulikgetriebe mit einer besonders starken Übersetzung auszulegen, daß auch aus diesem Grunde auf ein vorgeschaltetes Zahnradgetriebe verzichtet werden kann, ohne zu einem überdimensionalen Reibbelag-Andruckkolben Zuflucht nehmen zu müssen.

Dadurch entfällt auch die mit einem Zahnradgetriebe gegebene mechanische Trägheit.

Der in einem ersten Zylinder längsbewegliche erste Kolben ist mit einer Verdrehsicherung ausgerüstet, um zu gewährleisten, daß sich die Drehbewegung der Spindelmutter weder auf die Spindelstange noch auf den ersten Hydraulikkolben übertragen kann.

Die so gestaltete Hydraulik ist ein wirksames trägheitsarmes übersetzungsmittel. Auf ein weiteres mechanisches übersetzungsgetriebe (z. B. Planetengetrieb) kann verzichtet werden.

Die Spindelmutter ist motorfest und ist entsprechend einer bevorzugten Ausführungsform an der Hohlwelle als Innengewinde ausgebildet. In jedem Fall ist die Spindelmutter ein integraler Bestandteil des Rotors, wobei sich die Spindel an der Spindelmutter bzw. an dem Innengewinde der Hohlwelle abstützt.

Eine an der Spindelstange oder am ersten Hydraulikkolben befindliche Längsnut verhindert ein Mitdrehen, so daß eine Motordrehung zu einer Spindelvorschubbewegung führt, wobei gleichzeitig für den Spindeltrieb keine zusätzlichen Wälzlager erforderlich sind.

Nach einer ersten Ausführungsform der Erfindung ist die Spindel (stange) mit einer Verdrehsicherung ausgerüstet. Dies kann beispielsweise in herkömmlicher Weise über eine längsverschiebliche Nut/Feder-Kombination mit von hinten aufgesteckter, geschlitzter, gehäusefester Hülse realisiert werden. Eine solche Verdrehsicherung erfordert jedoch einen nicht zu vernachlässigenden Bauraum.

Nach einer vorteilhaften Weiterführung der Erfindung wird eine bedeutende Bauraumersparnis dadurch erzielt, daß der kraftschlüssig mit der Gewinde(stange) verbundene erste Hydraulikkolben selbst die Verdrehsicherung gewährleistet, indem er "unrund", d. h. mit nichtzirkularem, beispielsweise elliptischem Querschnitt ausgeführt ist. Hierbei sind keine sonstigen Maßnahmen zur Verdrehsicherung erforderlich.

Ein elliptischer Querschnitt weist kontinuierliche Radienübergänge auf. Damit kann man eine gute Kolbenabdichtung erzielen.
Ein solches Querschnittsprofil des ersten Hydraulikkolbens (und des zugehörigen Hydraulikzylinders) kann z. B. kostengünstig direkt ohne spanende Bearbeitung aus Aluminium-Strangpreßprofilen hergestellt werden.

Der dem Reibbelag (Bremsbelag) zugeordnete zweite Hydraulikkolben hat einen U-förmigen Längsschnitt. Seine topfförmige Gestalt eignet sich vorzüglich zur Aufnahme des Hubs des ersten Hydraulikkolbens. Hierdurch wird eine weitere Bauraum- und damit Gewichtsersparnis ermöglicht.

Nachfolgend wird der erfindungsgemäße Bremsaktor anhand einer Figur erläutert, die einen Längsschnitt durch einen erfindungsgemäßen Bremsaktor zeigt.

In einem Gehäuse 4 des Bremsaktors 2 befinden sich: ein Elektromotor 6 mit Hohlwelle 10, eine Spindel 12, 14, bestehend aus Spindelmutter 12 und Spindelstange 14 und ein Hydraulikgetriebe 16, 18, 20, bestehend aus einer Hydraulikkammer 18, einem ersten (primären) Hydraulikkolben 16 und einem zweiten (sekundären) Hydraulikkolben 20.

Der Reibbelag (Bremsbelag) 22 wird wie bei einer konventionellen Bremsanlage über einen hydraulisch betätigten Kolben 20 verschoben. Der Druck wird jedoch direkt an der Bremse durch die Motor/Spindel-Einheit 6, 12, 14 und ein hydraulisches Getriebe 16, 18, 20 erzeugt.
Neu gegenüber dem Stand der Technik ist insbesondere die im Vergleich zu herkömmlichen Ausführungen umgekehrte Anordnung der Spindel 14 und die Integration beider Spindelseiten in bestehende Bauteile hinein.
Durch die konzentrische Anordnung von Elektromotor 6, Spindel 12, 14 und Hydraulikgetriebe 16, 18, 20 kann das dem ersten Hydraulikkolben 16 zugewandte Ende der Spindel (stange) 14 direkt als erster Hydraulikkolben 16 ausgebildet sein.
Das andere Ende der Spindel (stange) 14 wird durch die Wahl eines geeigneten Motorprinzips (z. B. geschalteter Reluktanzmotor) innerhalb der Hohlwelle 10 des Elektromotors 6 untergebracht. Dadurch benötigt der erfindungsgemäße Bremsaktor 2 nur einen geringen Bauraum.

Der Elektromotor 6 ist drehfest mit der Mutter 12 des Spindeltriebs verbunden. Die Spindel (stange) 14 ist gegen Mitdrehen gesichert.
Nach einer bevorzugten Ausführungsform ist nicht die Spindel (stange) 14 sondern der erste Hydraulikkolben 16 mit einer Verdrehsicherung ausgestattet.
Da Spindel (stange) 14 und erster Hydraulikkolben 16 kraftschlüssig miteinander verbunden sind oder sogar eine Einheit bilden, sind eine Verdrehsicherung an der Spindel (stange) 14 und eine Verdrehsicherung am ersten Hydraulikkolben funktionell gleichwertig.

In dem konkreten Ausführungsbeispiel ist die Verdrehsicherung am ersten Hydraulikkolben durch Wahl eines nicht kreisförmigen, z. B. elliptischen Querschnitts 24 von Kolben 16 und dementsprechender Bohrung realisiert.

Egal, ob die Verdrehsicherung an der Spindel(stange) 14 oder am Hydraulikkolben 16 realisiert ist, in jedem Fall führt die Drehung des Elektromotors 6 zu einer Spindelvorschubbewegung. Für den Spindeltrieb ist kein zusätzliches Wälzlager erforderlich. Die Spindelmutter 12 wird über die Motorlager 8 geführt. Die Spindel(stange) 14 stützt sich in der Spindelmutter 12 ab.

Die Spindel (stange) 14 wirkt auf den kleinen (dünnen) ersten Hydraulikkolben 16, der über eine angepaßte Flächenübersetzung auf den zweiten Hydraulikkolben 20 (Bremskolben) wirkt. Dadurch, daß die Spindel 12, 14 vor dem kraftverstärkenden Hydraulikgetriebe 16, 18, 20 liegt und nicht dahinter, braucht sie nur geringe Axialkräfte aufzunehmen. Zur Bremsbetätigung muß die Spindel(stange) 14 bei geringen Kräften einen entsprechend größeren Weg zurücklegen.

Durch die erfindungsgemäße Gestaltung der Anordnung verschwindet die zurückgefahrene Spindel(stange) 14 in der Hohlwelle 10 des Elektromotors 6, während bei Zustellung der Bremse die Spindel(stange) 14 vorfährt und der erste Hydraulikkolben 16 in den in der Hydraulikkammer 18 vorgesehenen Bauraum eintaucht, der innerhalb des ausgehöhlten zweiten Hydraulikkolbens 20 (Bremskolbens) zur Verfügung steht.

Durch die konzentrische Anordnung der Komponenten in Verbindung mit der Verwendung eines mit Hohlwelle 10 versehenen Elektromotors 6 und eines mit Hohlachse versehenen zweiten Hydraulikkolbens 20 ist die Vorrichtung sehr kompakt.

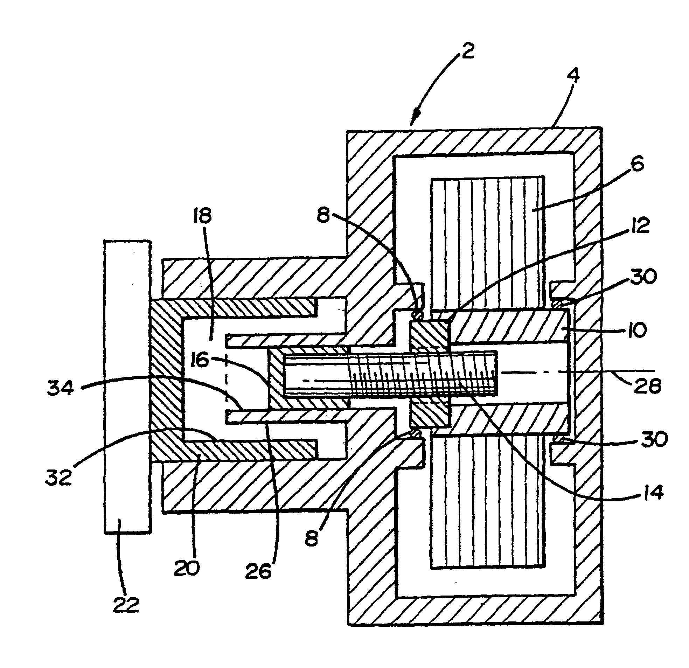

## Patentansprüche

1. Bremsaktor (2) mit
- einem Elektromotor (6) als Antriebselement,
- einer Umsetzeinrichtung zum Umsetzen der Rotationsbewegung des Elektromotors (6) in eine Linearbewegung, bestehend aus einer Spindel (12, 14) mit einer Spindelstange (14) und einer Spindelmutter (12), die mit dem Rotor des Elektromotors (6) kraftschlüssig verbunden ist und
- einem Hydraulikgetriebe (16, 18, 20), bestehend aus einer Hydraulikkammer (18) und einem ersten (16) und zweiten Hydraulikkolben (20) zur Übertragung der Linearbewegung der Umsetzeinrichtung auf einen Reibbelag einer Bremse mittels des zweiten Hydraulikkolbens (20),
**dadurch gekennzeichnet , dass**
- die Spindelstange (14) mit einer Verdrehsicherung ausgebildet und drehfest mit dem ersten Hydraulikkolben (16) bei einer Rotationsbewegung des Elektromotors in eine Linearbewegung versetzt wird, und dass
- der Elektromotor mit einer Hohlwelle (10) zur Aufnahme des gesamten Hubs der Spindelstange (14), der durch die Linearbewegung entsteht, versehen ist.

2. Bremsaktor nach Anspruch 1,
**dadurch gekennzeichnet,**
**daß** die Hohlwelle (10) des Elektromotors (6) mit einem Innengewinde versehen ist, d. h. daß die Spindelmutter (12) in den Rotor des Elektromotors (6) in der Weise integriert ist, daß die Hohlwelle (10) des Elektromotors (6) (zumindest teilweise) ein Innengewinde zur Aufnahme der Spindel (stange) (14) hat.

3. Bremsaktor nach Anspruch 1 oder 2,
**dadurch gekennzeichnet,**
**daß** eine Verlängerung der Spindel(stange) (14) als erster Hydraulikkolben (16) ausgesbildet ist, so daß somit Spindel (stange) (14) und erster Hydraulikkolben (16) eine integrierte Einheit bilden.

4. Bremsaktor nach einem der Ansprüche 1 - 3,
**dadurch gekennzeichnet,**
**daß** die Verdrehsicherung durch einen "unrunden", drehfest mit der Spindel (stange) (14) verbundenen ersten Hydraulikkolben (16) mit nichtzirkularem Querschnitt (24) gegeben ist.

5. Bremsaktor nach einem der vorhergehenden Ansprüche,
**dadurch gekennzeichnet,**
**daß** der zweite Hydraulikkolben (20) einen U-förmigen Längsschnitt zur Aufnahme des ersten Hydraulikkolbens (16), bzw. -zylinders hat.

## Claims

1. Brake actuator (2), having
- an electromotor (6) as the driving means,
- a converter for converting the rotational movement of the electromotor (6) into a linear movement, said converter comprising a spindle (12, 14) having a spindle rod (14) and a spindle nut (12), which is connected in a force-fitting manner to the rotor of the electromotor (6), and
- an hydraulic transmission (16, 18, 20), comprising an hydraulic chamber (18) and a first hydraulic piston (16) and a second hydraulic piston (20) for transmitting the linear movement of the converter to a friction lining of a brake by means of the second hydraulic piston (20),
**characterised in that**
- the spindle rod (14) is provided with a twist-preventing means and is set into a linear movement in a non-rotatable manner with the first hydraulic piston (16) during a rotational movement of the electromotor, and **in that**
- the electromotor is provided with a hollow shaft (10) to accommodate the entire stroke of the spindle rod (14) produced by the linear movement.

2. Brake actuator according to claim 1, **characterised in that** the hollow shaft (10) of the electromotor (6) is provided with an internal thread, i.e. that the spindle nut (12) is incorporated into the rotor of the electromotor (6) in such a manner that the hollow shaft (10) of the electromotor (6) has (at least partially) an internal thread to receive the spindle (rod) (14).

3. Brake actuator according to claim 1 or 2, **characterised in that** an extension of the spindle (rod) (14) is configured as the first hydraulic piston (16), so that spindle (rod) (14) and first hydraulic piston (16) thereby form an integrated unit.

4. Brake actuator according to one of claims 1 - 3, **characterised in that** the twist-preventing means is provided by a "non-round" first hydraulic piston (16), which is non-rotatably connected to the spindle (rod) (14) and has a non-circular cross-section (24).

5. Brake actuator according to one of the preceding claims, **characterised in that** the second hydraulic piston (20) has a U-shaped longitudinal section to accommodate the first hydraulic piston (16) or hydraulic cylinder respectively.

## Revendications

1. Actionneur de freinage (2) comportant :
• un moteur électrique (6) en tant qu'élément d'entraînement,
• un dispositif de conversion pour convertir le mouvement de rotation du moteur électrique (6) en un déplacement linéaire, constitué par une broche (12, 14) comportant une tige de broche (14) et un écrou de broche (12), qui est relié selon une liaison de force au rotor du moteur électrique (6) ; et
• une transmission hydraulique (16, 18, 20) constituée par une chambre hydraulique (18) et un premier piston hydraulique (17) et un second piston hydraulique (20) pour transmettre le déplacement linéaire du dispositif de conversion à une garniture de friction d'un frein, à l'aide du second piston hydraulique (20),
**caractérisé en ce que**
• la tige de broche (14) comporte un système de blocage en rotation et est entraînée en un déplacement linéaire, de façon fixe en rotation, avec le premier piston hydraulique (16) dans le cas d'un mouvement de rotation du moteur électrique,
• le moteur électrique est équipé d'un arbre creux (10) servant à recevoir la tige de broche (14) sur l'ensemble de sa course, parcourue lors du déplacement linéaire.

2. Actionneur de frein selon la revendication 1, **caractérisé en ce que** l'arbre creux (10) du moteur électrique (6) est équipé d'un taraudage, c'est-à-dire que l'écrou de broche (12) est intégré dans le rotor du moteur électrique (6) de telle sorte que l'arbre creux (10) du moteur électrique (6) possède (au moins partiellement) un taraudage destiné à loger la broche (la tige de broche) (14).

3. Actionneur de freinage selon la revendication 1 ou 2, **caractérisé en ce qu'**un prolongement de la broche (la tige de broche) (14) est agencé en tant que premier piston hydraulique (16) de sorte que par conséquent la broche (tige de broche) (14) et le premier piston hydraulique (16) forment une unité intégrée.

4. Actionneur de freinage selon l'une des revendications 1 à 3, **caractérisé en ce que** le blocage en rotation est obtenu au moyen d'un premier piston hydraulique (16) "non circulaire" qui est relié solidairement en rotation à la broche (la tige de broche) (14) et qui possède une section transversale non circulaire (24).

5. Actionneur de freinage selon l'une des revendications précédentes, **caractérisé en ce que** le second piston hydraulique (20) possède une section longitudinale en forme de U servant à loger le premier piston hydraulique (16) ou le premier cylindrique hydraulique.
